# EUROPEAN PATENT APPLICATION

(11) **EP 4 769 600 A1**
(43) Date of publication of application: **01.07.2026**
(21) Application number: 25845041.0
(22) Date of filing: 09.07.2025
(51) Int. Cl.: H01M 10/04, B65H 35/02, B65H 37/04, B65H 39/16

(54) **EQUIPMENT FOR ASSEMBLING ELECTRODE**

(30) Priority: 24.07.2024 KR 20240097988
(71) Applicant: LG Energy Solution, Ltd., Seoul 07335 (KR)
(72) Inventor: YOON, Tae Keon, Daejeon 34122 (KR)
(74) Representative: Goddar, Heinz J.
(86) International application number: PCT/KR2025/010028
(87) International publication number: WO 2026/023944

(57) **Abstract**

The present invention provides a facility for assembling an electrode capable of simultaneously producing two kinds of unit battery cells. The facility for assembling an electrode includes a pair of assembly parts, and at least any one of the pair of assembly parts may be configured to selectively manufacture a mono-cell or a half-cell.

## Description

### [TECHNICAL FIELD]

This application claims the benefit of priority based on Korean Patent Application No. 10-2024-0097988 filed on July 24, 2024, and entire contents disclosed in the document of the patent application are included as a part of this specification.

The present invention relates to a facility for assembling an electrode manufacturing an electrode assembly by assembling electrodes and separators, and an electrode assembly process using the same.

### [BACKGROUND ART]

Secondary batteries having high application ability and electric characteristics, such as high energy density and the like, according to product groups are generally applied not only to portable devices, but also electric vehicles (EVs) or hybrid electric vehicles (HEVs) driven by electric driving sources.

These secondary batteries are gaining attention as a new energy source for enhancing eco-friendliness and energy efficiency, not only due to a primary advantage of being able to drastically reduce the use of fossil fuels, but also due to the fact that no by-products are generated from energy use.

Examples of kinds of secondary batteries that are currently widely used include lithium-ion batteries, lithium polymer batteries, nickel-cadmium batteries, nickel-hydrogen batteries, nickel-zinc batteries, and the like. The of such a unit secondary battery cell, i.e., a unit battery cell, is approximately in the rage of 2.5V to 4.5V. Thus, when a higher output voltage than this is required, a battery pack may be configured by connecting a plurality of battery cells in series. Also, the battery pack may be configured by connecting a plurality of battery cells in parallel based on charging and discharging capacity required for the battery pack. Accordingly, the number of battery cells included in the battery pack and the configuration of their electrical connection may be variously set based on a required output voltage and/or charging and discharging capacity.

Meanwhile, known types of unit secondary battery cells include cylindrical, prismatic, and pouch-type battery cells. Among them, the pouch-type battery cell has a structure in which a stack-type electrode assembly having electrodes and separators stacked in multilayers is housed in a pouch made of metal material.

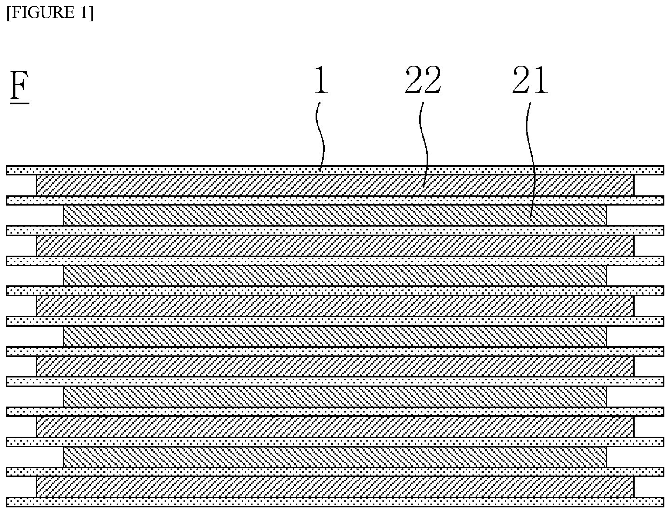

FIG. 1 shows the structure of the electrode assembly. Referring to this, the electrode assembly F is configured by stacking positive electrodes 21 and negative electrodes 22 together with separators 1. Specifically, the positive electrodes 21 and the negative electrodes 22 are alternately and repeatedly stacked with each separator 1 interposed between the positive electrode 21 and the negative electrode 22.

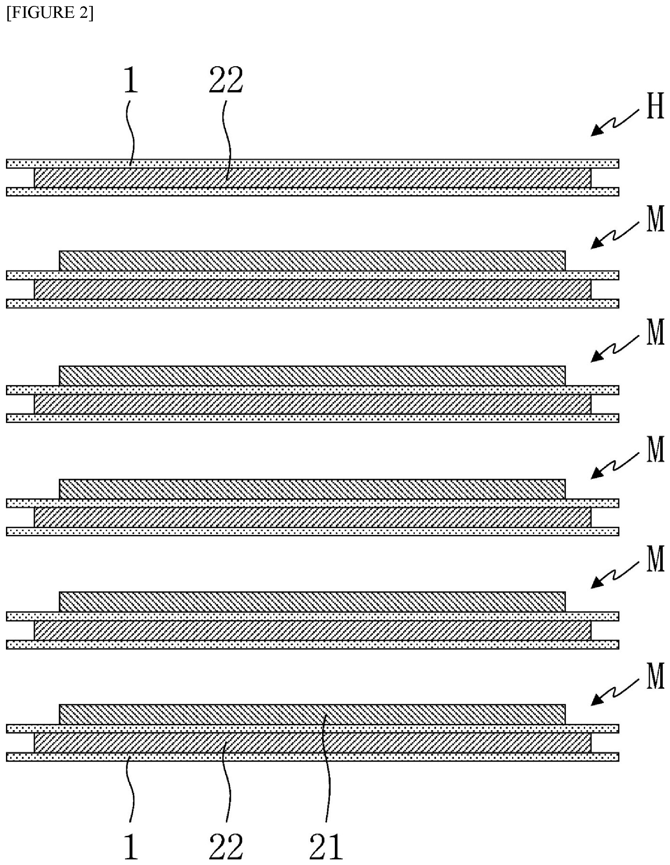

FIG. 2 shows mono-cells and a half-cell which constitute the electrode assembly of FIG. 1. Referring to this, to manufacture the electrode assembly F of FIG. 1, a plurality of unit cells constructed by stacking the positive electrode 21 and/or the negative electrode 22 together with the separator 1 in advance may be assembled together once more. Typically, as shown in FIG. 2, a full-cell F may be manufactured by assembling together a plurality of mono-cells M, each having a positive electrode 21, a separator 1, a negative electrode 22, and a separator 1 sequentially stacked, and one half-cell H having a negative electrode 22 interposed between a pair of separators 1.

Meanwhile, as described above, to manufacture the one full-cell F, the plurality of mono-cells M and one half-cell H are required, and thus, the required quantity of half-cells H is significantly smaller than the required quantity of mono-cells M. To meet these demands, the equipment for manufacturing the half-cell H needs to either frequently stop operation to wait for a sufficient number of mono-cells M to be produced, or operate much more slowly than its possible manufacturing speed. This causes production inefficiency, and leads to unnecessary use of space.

### [DISCLOSURE]

### [TECHNICAL PROBLEM]

The present invention has been conceived under the background of the related art as described above, and is to provide a facility for assembling an electrode capable of matching the production quantity ratio of mono-cells and half-cells to demands without unnecessary downtime or reduction in manufacturing speed.

Specifically, the present invention is to provide a facility for assembling an electrode capable of being operated at maximum speed while maintaining the quantity ratio of mono-cells and half-cells required for full-cell production.

Another object of the present invention is to provide an electrode assembly process for manufacturing electrode assemblies by operating the above-described facility for assembling an electrode.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to achieve the above objects, the present invention provides a facility for assembling an electrode including a central separator roll from which a central separator having a width of 2W is unwound and continuously supplied; a cutting part continuously cutting the central separator to be divided into an upper central separator and a lower central separator, each having a width of W; an upper assembly part supplied with and combining the upper central separator and an upper electrode; and a lower assembly part supplied with and combining the lower central separator and a lower electrode.

According to the present invention, two unit cells may be simultaneously produced using the central separator supplied from a single roll.

The upper electrode may include an upper first electrode and an upper second electrode having a polarity different from that of the upper first electrode. In this case, the facility for assembling an electrode may further include: an upper first electrode roll from which the upper first electrode is unwound and continuously supplied to the upper assembly part; an upper separator roll from which an upper separator having a width of W is unwound and continuously supplied to the upper assembly part; and an upper second electrode roll from which the upper second electrode is unwound and continuously supplied to the upper assembly part.

The lower electrode may include a lower first electrode and a lower second electrode having a polarity different from that of the lower first electrode. In this case, the facility for assembling an electrode may further include: a lower first electrode roll from which the lower first electrode is unwound and continuously supplied to the lower assembly part; a lower separator roll from which a lower separator having a width of W is unwound and continuously supplied to the lower assembly part; and a lower second electrode roll from which the lower second electrode is unwound and continuously supplied to the lower assembly part.

According to one embodiment, the upper assembly part may be configured to manufacture a mono-cell.

Specifically, the upper assembly part may manufacture the mono-cell by combining the upper first electrode, the upper separator, the upper second electrode, and the upper central separator to be sequentially stacked from the topmost layer.

According to the one embodiment, the lower assembly part may be configured to selectively manufacture any one of a mono-cell and a half-cell.

Specifically, the lower assembly part may manufacture the half-cell by combining the lower central separator, the lower second electrode, and the lower separator to be sequentially stacked from the topmost layer.

Additionally, the lower assembly part may manufacture the mono-cell by combining the lower central separator, the lower second electrode, the lower separator, and the lower first electrode to be sequentially stacked from the topmost layer.

In this case, the facility for assembling an electrode may further include an adhesive film roll from which an adhesive film is unwound and continuously supplied.

Unlike the separator, the electrode is formed of a thin metal foil material, so it may be torn when undergoing excessive tension. Therefore, although in the case of the separator, the provision of appropriate tension can prevent its sagging during its conveyance, in the case of the electrode, a support is needed which can support it from below.

Because of this, the adhesive film may be attached to the lower surface of the lower first electrode before the lower central separator, the lower second electrode, the lower separator, and the lower first electrode are combined to each other, and may be detached from the lower surface of the lower first electrode after the lower central separator, the lower second electrode, the lower separator, and the lower first electrode are combined to each other. As the adhesive film supports the lower first electrode, the sagging due to gravity does not occur in the lower first electrode, which is stacked at the lowermost layer without being supported by any separator.

According to another embodiment, the upper assembly part may be configured to selectively manufacture any one of a mono-cell and a half-cell.

Specifically, the upper assembly part may manufacture the half-cell by combining the upper separator, the upper second electrode, and the upper central separator to be sequentially stacked from the topmost layer.

Additionally, the upper assembly part may manufacture the mono-cell by combining the upper separator, the upper second electrode, the upper central separator, and the upper first electrode to be sequentially stacked from the topmost layer.

In this case, the facility for assembling an electrode may further include an adhesive film roll from which an adhesive film is unwound and continuously supplied.

Unlike the separator, the electrode is formed of a thin metal foil material, so it may be torn when undergoing excessive tension. Therefore, although in the case of the separator, the provision of appropriate tension can prevent its sagging during its conveyance, in the case of the electrode, a support is needed which can support it from below.

Because of this, the adhesive film may be attached to the lower surface of the upper first electrode before the upper separator, the upper second electrode, the upper central separator, and the upper first electrode are combined to each other, and may be detached from the lower surface of the upper first electrode after the upper separator, the upper second electrode, the upper central separator, and the upper first electrode are combined to each other.

According to the another embodiment, the upper assembly part may be configured to manufacture a mono-cell.

Specifically, the lower assembly part may manufacture the mono-cell by combining the lower first electrode, the lower central separator, the lower second electrode assembly, and the lower separator to be sequentially stacked from the topmost layer.

The present invention also provides an electrode assembly process using the facility for assembling an electrode.

In the facility for assembling an electrode according to one embodiment, the upper assembly part and the lower assembly part may manufacture a mono-cell in which a first electrode, a separator, a second electrode, and a separator are sequentially stacked, and a half-cell in which a second electrode is interposed and stacked between a pair of separators, and at least any one of the upper assembly part and the lower assembly part may be configured to manufacture the mono-cell, and at least any one of them may be configured to selectively manufacture any one of the mono-cell and the half-cell.

In this case, the electrode assembly process according to the present invention includes: alternately repeating a first step in which both the upper assembly part and the lower assembly part manufacture the mono-cell; and a second step in which any one of the upper assembly part and the lower assembly part manufactures the mono-cell, and another thereof manufactures the half-cell.

Since the manufacture of the full-cell requires a much smaller number of the half-cells compared to the mono-cells, both the upper assembly part and the lower assembly part can be operated in this way without idle time, while still maintaining the production quantity ratio of the half-cell and the mono-cell.

According to one embodiment, the electrode assembly process may further include a third step of manufacturing a full-cell by combining a plurality of mono-cells and one half-cell.

The first step and the second step may be repeated at a predetermined cycle, and the manufacturing quantity ratio of the mono-cell and the half-cell in the predetermined cycle may be determined based on the ratio of the mono-cell and the half-cell constituting the full-cell. For example, in one embodiment, the full-cell may include 2n+1 mono-cells and one half-cell, and depending on this, the electrode assembly process may be repeatedly performed such that the second step is performed one time whenever the first step is performed n times.

### [ADVANTAGEOUS EFFECTS]

The present invention provides a facility for assembling an electrode including an assembly part configured to selectively produce any one of a mono-cell or a half-cell so as to match the production quantity ratio of mono-cells and half-cells to demands, without unnecessary downtime or reduction in manufacturing speed.

Specifically, the present invention means to provide a facility for assembling an electrode capable of being operated at maximum speed while producing mono-cells and half-cells in a predetermined quantity ratio in each cycle based on the quantity ratio of mono-cells and half-cells required to manufacture a full-cell.

The present invention can also provide an electrode assembly process for manufacturing electrode assemblies by operating the above-described facility for assembling an electrode.

Besides, the present invention may have various other effects, and some of them will be described in respective embodiments, while the description may be omitted for effects that can be easily inferred by those skilled in the art.

### [BRIEF DESCRIPTION OF DRAWINGS]

FIG. 1 shows the structure of the electrode assembly.
FIG. 2 shows mono-cells and a half-cell which constitute the electrode assembly of FIG. 1.
FIG. 3 shows a facility for assembling an electrode according to one embodiment.
FIG. 4 shows a state in which the central separator of FIG. 3 is cut by the cutting part.
FIG. 5 shows a facility for assembling an electrode according to another embodiment.
FIG. 6 shows an electrode assembly process according to one embodiment.
FIGS. 7 to 9 respectively show first to third steps according to one embodiment.
FIG. 10 shows a full-cell whose assembly has been completed.

### [DESCRIPTION OF REFERENCE NUMERALS]

1: separator 10: central separator 100: central separator roll 101: upper central separator 102: lower central separator 11: upper separator 110: upper separator roll 12: lower separator 120: lower separator roll 21: first electrode (positive electrode) 211: upper first electrode 2110: upper first electrode roll 212: lower first electrode 2120: lower first electrode roll 22: second electrode (negative electrode) 221: upper second electrode 2210: upper second electrode roll 222: lower second electrode 2220: lower second electrode roll 3: adhesive film 30: adhesive film roll 31: recovery roll 4: cutting part 51: upper assembly part 52: lower assembly part M: mono-cell H: half-cell F: full-cell (electrode assembly)

### [DETAILED DESCRIPTION OF THE PREFERRED EMBODIMENTS]

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

Although the terms "first", "second", and so on are used to describe various components, it is obvious that these components are not limited by these terms. These terms are merely used to distinguish one component from another component, and it is obvious that, unless specifically stated to the contrary, a first component may also be a second component.

Throughout the specification, unless specifically stated to the contrary, each element may be singular or plural.

Hereinafter, the phrase "any configuration is disposed in the upper side of or in the lower side of a component" or "on or below a component" may mean not only that any configuration is disposed in contact with the upper surface or lower surface of said component, but also that another configuration may be interposed between said component and any configuration disposed on or below said component.

Additionally, if a component is described as being "connected," "coupled," or "contacted" to another component, the components may be directly connected or contacted to one another, but it is to be understood that still another element may be "interposed" between the components, or that the components may be "connected," "coupled," or "contacted" to each other through still another element.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Throughout the disclosure, the phrase "A and/or B" means A, B, or A and B, unless otherwise specified, and the phrase "C to D" means equal to or greater than C and equal to or smaller than D unless otherwise specified.

Hereinafter, preferred embodiments of the present invention will be described with reference to the accompanying drawings.

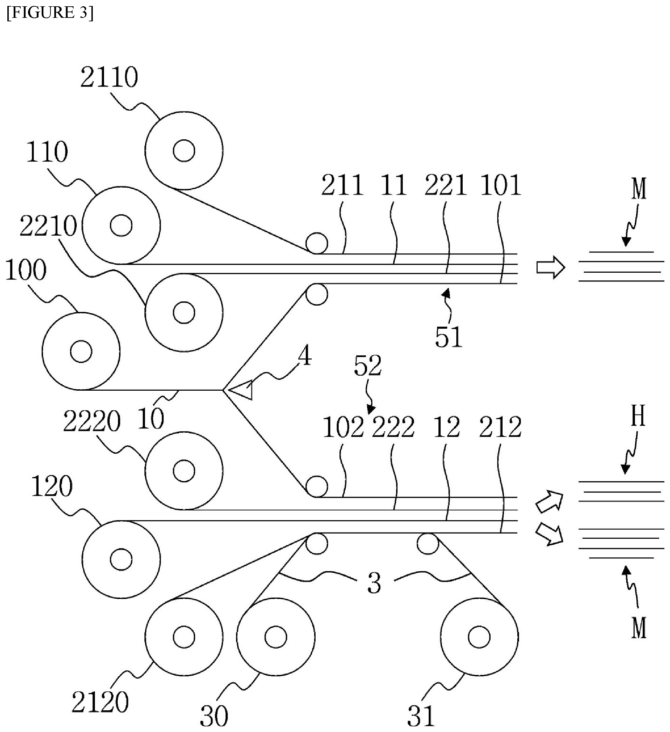

FIG. 3 shows a facility for assembling an electrode according to one embodiment. Referring to this, the facility for assembling an electrode according to one embodiment includes a central separator roll 100 and a central separator 10 that is unwound from the central separator roll 100 and continuously supplied.

The central separator 10 is divided into two portions in the width direction while passing through a cutting part 4. Specifically, the central separator 10 is cut and divided into an upper central separator 101 and a lower central separator 102 based on the cutting part 4.

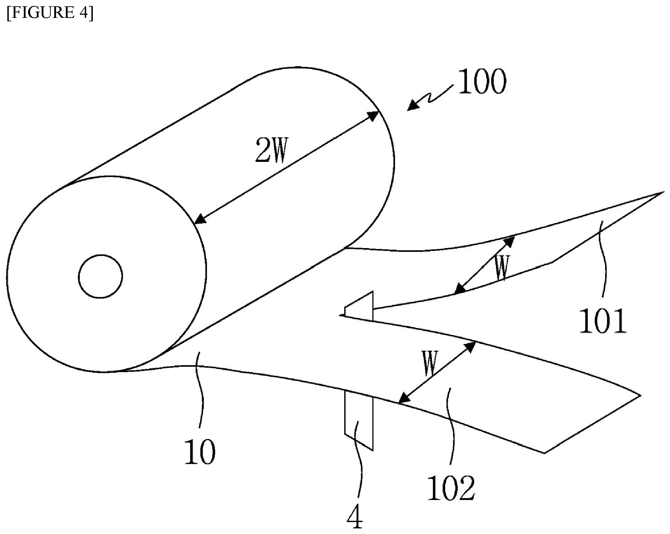

FIG. 4 shows a state in which the central separator of FIG. 3 is cut by the cutting part. Referring to this, the central separator 10 originally has a width of 2W, and is divided into the upper central separator 101 and the lower central separator 102, each having a width of W, as it passes through the cutting part 4.

According to this embodiment, it is possible to supply separators from one central separator roll 100 to two assembly parts at the same speed. Thus, two assembly processes can be controlled to be operated at the same speed simultaneously without either side becoming slower or faster.

Referring again to FIG. 3, the upper central separator 101 is combined with an upper electrode in the upper assembly part 51 to form at least one type of unit cell, and the lower central separator 102 is combined with a lower electrode in the lower assembly part 52 to form at least one type of unit cell. That is, in the facility for assembling an electrode according to the present embodiment, at least two types of unit cells are simultaneously and continuously produced.

The upper electrode may include an upper first electrode 211 and an upper second electrode 221 having a polarity different from that of the upper first electrode 211. In this case, the facility for assembling an electrode may further include: an upper first electrode roll 2110 from which the upper first electrode 211 is unwound and continuously supplied to the upper assembly part 51; an upper separator roll 110 from which an upper separator 11 having a width of W is unwound and continuously supplied to the upper assembly part 51; and an upper second electrode roll 2210 from which the upper second electrode 221 is unwound and continuously supplied to the upper assembly part 51.

The lower electrode may include a lower first electrode 212 and a lower second electrode 222 having a polarity different from that of the lower first electrode 212. In this case, the facility for assembling an electrode may further include: a lower first electrode roll 2120 from which the lower first electrode 212 is unwound and continuously supplied to the lower assembly part 52; a lower separator roll 120 from which a lower separator 11 having a width of W is unwound and continuously supplied to the lower assembly part 52; and a lower second electrode roll 2220 from which the lower second electrode 222 is unwound and continuously supplied to the lower assembly part 52.

According to one embodiment, the upper assembly part 51 may be configured to manufacture a mono-cell M.

Specifically, the upper assembly part 51 may manufacture the mono-cell M by combining the upper first electrode 211, the upper separator 11, the upper second electrode 221, and the upper central separator 101 to be sequentially stacked from the topmost layer.

According to the one embodiment, the lower assembly part 52 may be configured to selectively manufacture any one of a mono-cell M and a half-cell H.

Specifically, the lower assembly part 52 may manufacture the half-cell H by combining the lower central separator 102, the lower second electrode 222, and the lower separator 12 to be sequentially stacked from the topmost layer.

Additionally, the lower assembly part 52 may manufacture the mono-cell M by combining the lower central separator 102, the lower second electrode 222, the lower separator 12, and the lower first electrode 212 to be sequentially stacked from the topmost layer.

In this case, the facility for assembling an electrode may further include an adhesive film roll 30 from which an adhesive film 3 is unwound and continuously supplied.

Unlike the separator, the electrode is formed of a thin metal foil material, so it may be torn when undergoing excessive tension. Therefore, although in the case of the separator, the provision of appropriate tension can prevent its sagging during its conveyance, in the case of the electrode, a support is needed which can support it from below.

Because of this, the adhesive film 3 may be attached to the lower surface of the lower first electrode 212 before the lower central separator 102, the lower second electrode 222, the lower separator 12, and the lower first electrode 212 are combined to each other, and may be detached from the lower surface of the lower first electrode 212 after the lower central separator 102, the lower second electrode 222, the lower separator 12, and the lower first electrode 212 are combined to each other. As the adhesive film 3 supports the lower first electrode 212, the sagging due to gravity does not occur in the lower first electrode 212, which is stacked at the lowermost layer without being supported by the separator 1.

The adhesive film 3 may be rewound onto a recovery roll 31 and recovered after passing through the lower assembly part 52 and being detached from the lower first electrode 212.

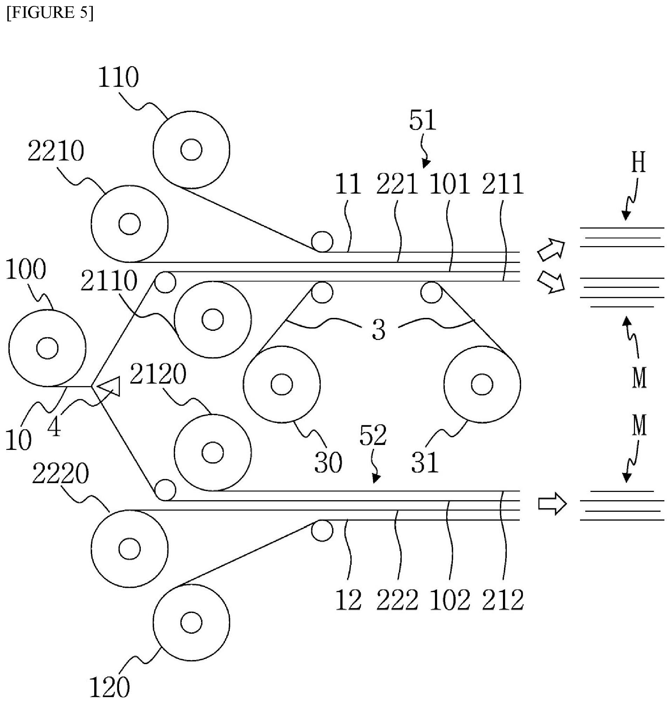

FIG. 5 shows a facility for assembling an electrode according to another embodiment. Referring to this, unlike in the one embodiment, the upper assembly part 51 according to another embodiment may be configured to selectively manufacture any one of a mono-cell M and a half-cell H.

Specifically, the upper assembly part 51 may manufacture the half-cell H by combining the upper separator 11, the upper second electrode 221, and the upper central separator 101 to be sequentially stacked from the topmost layer.

Additionally, the upper assembly part 51 may manufacture the mono-cell M by combining the upper separator 11, the upper second electrode 221, the upper central separator 101, and the upper first electrode 211 to be sequentially stacked from the topmost layer.

In this case, the facility for assembling an electrode may further include an adhesive film roll 30 from which an adhesive film 3 is unwound and continuously supplied.

Unlike the separator, the electrode is formed of a thin metal foil material, so it may be torn when undergoing excessive tension. Therefore, although in the case of the separator, the provision of appropriate tension can prevent its sagging during its conveyance, in the case of the electrode, a support is needed which can support it from below.

Because of this, the adhesive film 3 may be attached to the lower surface of the upper first electrode 211 before the upper separator 11, the upper second electrode 221, the upper central separator 101, and the upper first electrode 211 are combined to each other, and may be detached from the lower surface of the upper first electrode 211 after the upper separator 11, the upper second electrode 221, the upper central separator 101, and the upper first electrode 211 are combined to each other.

The adhesive film 3 may be rewound onto a recovery roll 31 and recovered after passing through the upper assembly part 51 and being detached from the upper first electrode 212.

According to the another embodiment, the upper assembly part 51 may be configured to manufacture a mono-cell M.

Specifically, the lower assembly part 52 may manufacture the mono-cell H by combining the lower first electrode 212, the lower central separator 102, the lower second electrode 222, and the lower separator 12 to be sequentially stacked from the topmost layer.

In summary, in the facility for assembling an electrode, the upper assembly part 51 and the lower assembly part 52 may manufacture a mono-cell M in which a first electrode 21, a separator 1, a second electrode 22, and a separator 1 are sequentially stacked, and a half-cell H in which a second electrode 22 is interposed and stacked between a pair of separators 1, and at least any one of the upper assembly part 51 and the lower assembly part 52 may be configured to manufacture the mono-cell M, and at least any one of them may be configured to selectively manufacture any one of the mono-cell M and the half-cell H.

That is, in the facility for assembling an electrode according to both the one embodiment and the another embodiment of the present invention, at least any one side manufactures a mono-cell, and at least another side selectively manufactures any one of a mono-cell and a half-cell, thereby enabling the operation corresponding to the respective demands for mono-cells and for half-cells without slowing down the overall manufacturing speed or the operation speed of the equipment.

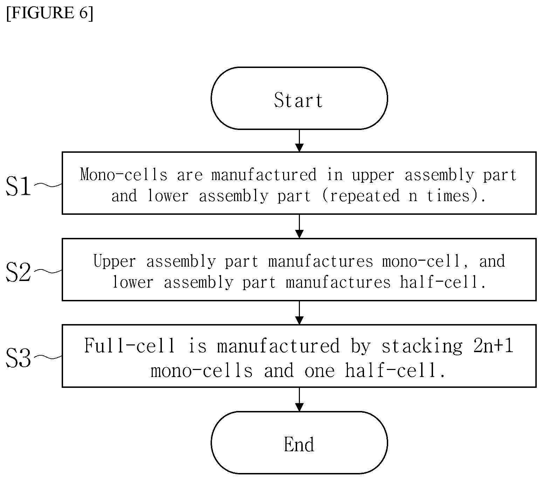

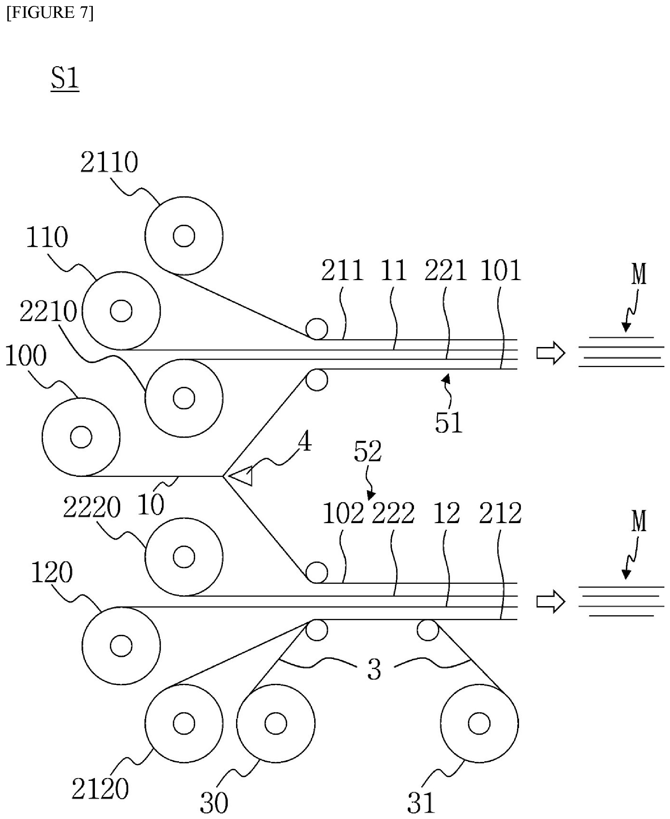

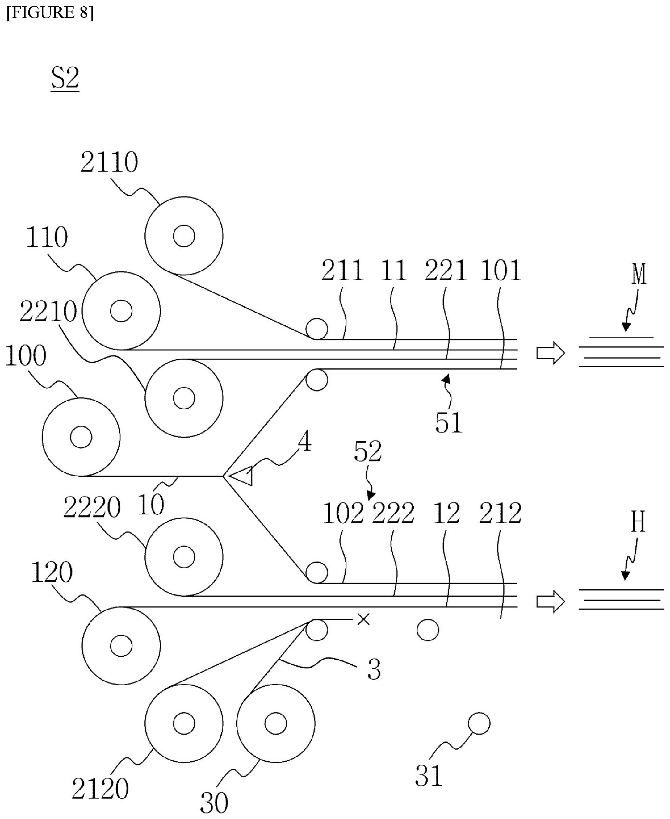

FIG. 6 shows an electrode assembly process according to one embodiment, and FIGS. 7 to 9 respectively show first to third steps according to one embodiment. Referring to these drawings, the electrode assembly process according to one embodiment includes alternately repeating a first step S1 in which both the upper assembly part 51 and the lower assembly part 52 manufacture the mono-cell M; and a second step S2 in which one of the upper assembly part 51 and the lower assembly part 52 manufactures the mono-cell M, and the other thereof manufactures the half-cell H.

Since the manufacture of the full-cell F requires a much smaller number of the half-cells H compared to the mono-cells M, both the upper assembly part 51 and the lower assembly part 52 can be operated in this way without idle time, while still maintaining the production quantity ratio of the half-cell H and the mono-cell M.

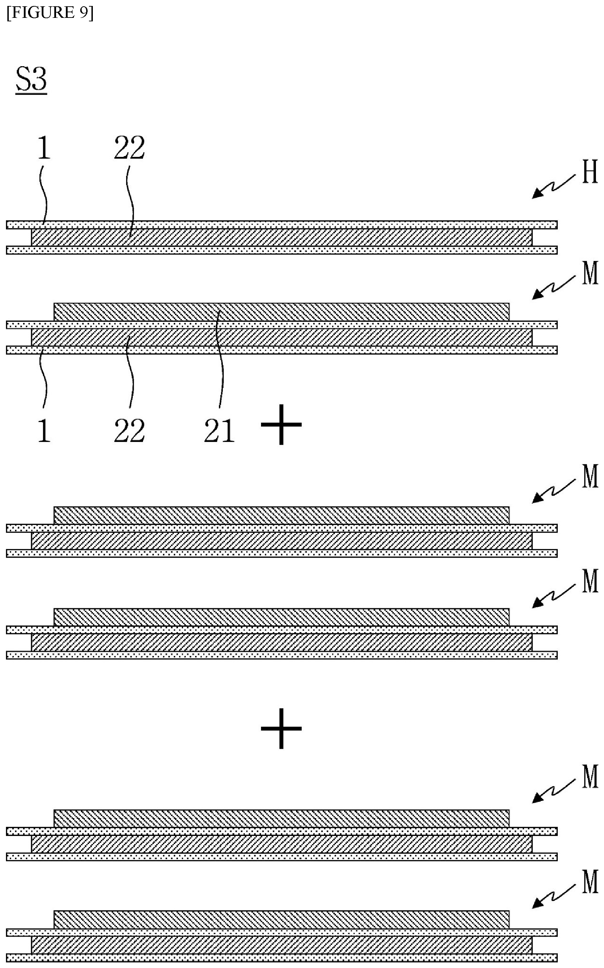

Referring again to FIG. 9, the electrode assembly process according to one embodiment may further include a third step S3 of manufacturing a full-cell F by combining a plurality of mono-cells M and one half-cell H.

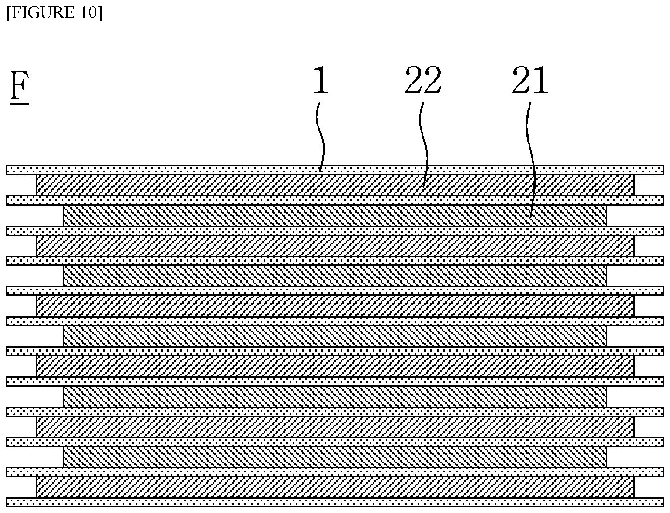

FIG. 10 shows a full-cell whose assembly has been completed. Referring to this together with FIG. 9, the full-cell F according to one embodiment of the present invention may be constructed by combining n mono-cells M and one half-cell H, and may have a structure in which first electrodes 21 and second electrodes 22 are alternately and repeatedly stacked between the respective layers of the plurality of stacked separators 1.

In this regard, referring also to FIG. 6, the first step S1 and the second step S2 may be repeated at a predetermined cycle, and the manufacturing quantity ratio of the mono-cell M and the half-cell H in the predetermined cycle may be determined based on the ratio of the mono-cell M and the half-cell H constituting the full-cell F. For example, in one embodiment, the full-cell F may include 2n+1 mono-cells M and one half-cell H, and depending on this, the electrode assembly process may be repeatedly performed such that the second step S2 is performed one time whenever the first step S1 is performed n times.

The foregoing embodiments should be construed as illustrative in all respects and not as restrictive, and the scope of the present invention will be indicated by the claims to be described below rather than by the foregoing detailed description. And the meaning and scope of the claims to be described below, as well as all modifications and variations derived from the equivalent concept, should be interpreted as being included within the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing one embodiment of the present invention, it should be appreciated that predictable effects are also to be recognized by the configuration.

## Claims

1. A facility for assembling an electrode comprising:
a central separator roll from which a central separator having a width of 2W is unwound and continuously supplied;
a cutting part continuously cutting the central separator to be divided into an upper central separator and a lower central separator, each having a width of W;
an upper assembly part supplied with and combining the upper central separator and an upper electrode; and
a lower assembly part supplied with and combining the lower central separator and a lower electrode.

2. The facility for assembling an electrode of claim 1, wherein the upper electrode includes an upper first electrode and an upper second electrode having a polarity different from a polarity of the upper first electrode,
the facility for assembling an electrode further comprising:
an upper first electrode roll from which the upper first electrode is unwound and continuously supplied to the upper assembly part;
an upper separator roll from which an upper separator having a width of W is unwound and continuously supplied to the upper assembly part; and
an upper second electrode roll from which the upper second electrode is unwound and continuously supplied to the upper assembly part.

3. The facility for assembling an electrode of claim 2, wherein the upper assembly part manufactures a mono-cell by combining the upper first electrode, the upper separator, the upper second electrode, and the upper central separator to be sequentially stacked from a topmost layer.

4. The facility for assembling an electrode of claim 2, wherein the upper assembly part manufactures a half-cell by combining the upper separator, the upper second electrode, and the upper central separator to be sequentially stacked from a topmost layer.

5. The facility for assembling an electrode of claim 4, wherein the upper assembly part manufacture a mono-cell by combining the upper separator, the upper second electrode, the upper central separator, and the upper first electrode to be sequentially stacked from a topmost layer.

6. The facility for assembling an electrode of claim 5, further comprising:
an adhesive film roll from which an adhesive film is unwound and continuously supplied,
wherein the adhesive film is attached to a lower surface of the upper first electrode before the upper separator, the upper second electrode, the upper central separator, and the upper first electrode are combined to each other, and is detached from the lower surface of the upper first electrode after the upper separator, the upper second electrode, the upper central separator, and the upper first electrode are combined to each other.

7. The facility for assembling an electrode of claim 1, wherein the lower electrode includes a lower first electrode and a lower second electrode having a polarity different from a polarity of the lower first electrode,
the facility for assembling an electrode further comprising:
a lower first electrode roll from which the lower first electrode is unwound and continuously supplied to the lower assembly part;
a lower separator roll from which a lower separator having a width of W is unwound and continuously supplied to the lower assembly part; and
a lower second electrode roll from which the lower second electrode is unwound and continuously supplied to the lower assembly part.

8. The facility for assembling an electrode of claim 7, wherein the lower assembly part manufactures a half-cell by combining the lower central separator, the lower second electrode, and the lower separator to be sequentially stacked from a topmost layer.

9. The facility for assembling an electrode of claim 8, wherein the lower assembly part manufactures a mono-cell by combining the lower central separator, the lower second electrode, the lower separator, and the lower first electrode to be sequentially stacked from a topmost layer.

10. The facility for assembling an electrode of claim 9, further comprising:
an adhesive film roll from which an adhesive film is unwound and continuously supplied,
wherein the adhesive film is attached to a lower surface of the lower first electrode before the lower central separator, the lower second electrode, the lower separator, and the lower first electrode are combined to each other, and is detached from the lower surface of the lower first electrode after the lower central separator, the lower second electrode, the lower separator, and the lower first electrode are combined to each other.

11. The facility for assembling an electrode of claim 7, wherein the lower assembly part manufactures a mono-cell by combining the lower first electrode, the lower central separator, the lower second electrode, and the lower separator to be sequentially stacked from a topmost layer.

12. The facility for assembling an electrode of claim 1, wherein the upper assembly part and the lower assembly part manufactures a mono-cell in which a first electrode, a separator, a second electrode, and a separator are sequentially stacked, and a half-cell in which a second electrode is interposed and stacked between a pair of separators, and
wherein at least any one of the upper assembly part and the lower assembly part is configured to manufacture the mono-cell, and at least any one thereof is configured to selectively manufacture any one of the mono-cell and the half-cell.

13. An electrode assembly process using the facility for assembling an electrode of claim 12, the electrode assembly process comprising:
alternately repeating
a first step in which both the upper assembly part and the lower assembly part manufacture the mono-cell; and
a second step in which any one of the upper assembly part and the lower assembly part manufactures the mono-cell, and another thereof manufactures the half-cell.

14. The electrode assembly process of claim 13, further comprising:
a third step of manufacturing a full-cell by combining a plurality of mono-cells and one half-cell,
wherein the first step and the second step are repeated at a predetermined cycle, and
wherein in the predetermined cycle, a manufacturing quantity ratio of the mono-cell and the half-cell is determined based on a ratio of the mono-cell and the half-cell constituting the full-cell.
